(19) Europäisches Patentamt European Patent Office Office européen des brevets

(11) **EP 2 213 546 B1**

(12) **EUROPEAN PATENT SPECIFICATION**

(45) Date of publication and mention of the grant of the patent:
**20.08.2014 Bulletin 2014/34**

(51) Int Cl.:
**B62D 6/00** *(2006.01)* **B62D 5/04** *(2006.01)*
**B62D 101/00** *(2006.01)* **B62D 113/00** *(2006.01)*
**B62D 119/00** *(2006.01)* **B62D 1/28** *(2006.01)*

(21) Application number: **07832562.8**

(22) Date of filing: **27.11.2007**

(86) International application number:
**PCT/JP2007/072837**

(87) International publication number:
**WO 2009/069196 (04.06.2009 Gazette 2009/23)**

(54) **STEERING CONTROL DEVICE**

LENKSTEUERVORRICHTUNG

DISPOSITIF DE COMMANDE DE LA DIRECTION

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**04.08.2010 Bulletin 2010/31**

(73) Proprietor: **Mitsubishi Electric Corporation Tokyo 100-8310 (JP)**

(72) Inventors:
 • **ENDO, Masaya**
 **Tokyo 100-8310 (JP)**
 • **KURISHIGE, Masahiko**
 **Tokyo 100-8310 (JP)**
 • **OGAWA, Kenji**
 **Chiyoda-ku,**
 **Tokyo 1008310 (JP)**

(74) Representative: **Popp, Eugen**
 **Meissner, Bolte & Partner GbR**
 **Postfach 86 06 24**
 **81633 München (DE)**

(56) References cited:
 JP-A- 8 337 181    JP-A- 11 078 936
 JP-A- 11 208 498    JP-A- 11 321 686
 JP-A- 2004 256 076   JP-B2- 3 498 910
 JP-B2- 3 693 048

**Description**

Technical Field

The present invention relates to a steering control device for performing automatic steering of wheels by using a motor for electric power steering.

Background Art

In a conventional steering control device for performing automatic steering, during the automatic steering, a motor is caused to generate both torque necessary for the automatic steering and torque necessary for electric power assist. With this configuration, when a driver performs steering operation during the automatic steering, electric power assist torque exceeds automatic steering torque, which allows the driver to perform steering with ease (for example, Patent Document 1).

Further, in Patent Document 1, in order to easily discriminate inertia torque of the steering wheel from steering torque generated by the steering operation of the driver, an assist torque gain is set smaller during the automatic steering compared to a case of non-automatic steering.

Patent Document 1: JP 3693048 B (page.2, line.4 to page.3, line.18, FIG. 4)
Patent Document 2: JP 3498910 B (p.2, lines.27 to 40, FIG. 2)

Disclosure of the Invention

Problems to be solved by the Invention

In such a steering control device for performing the automatic steering, the electric power assist torque fluctuates during the automatic steering due to the inertia torque of the steering wheel, which causes a problem that the automatic steering control may not be performed smoothly, resulting in generation of noise and vibration.

Further, if the assist torque gain is set smaller during the automatic steering compared to the case of the non-automatic steering, an influence on the automatic steering control may be made smaller due to decreased fluctuation of the electric power assist torque. However, there is another problem that the steering torque of the driver becomes large compared to the case of the non-automatic steering. Particularly, in order to enable the driver to perform the steering, the assist torque gain needs to be set larger to a certain extent. Accordingly, the automatic steering control may not be performed smoothly due to the fluctuation of the electric power assist torque, and hence there still remains the problem of the generation of noise and vibration.

Further, in Patent Document 2, in a lane following controller for outputting, to a motor of an automatic steering actuator, a control current for causing a host vehicle to follow a forward traffic lane, the control current output to the motor is subjected to a filtering process to pass only signal components in a low frequency range, and, when the output current exceeds a predetermined steering intervention threshold, it is judged that there is driver's steering intervention, to thereby reduce or cut off the control current.

Note that, unlike the case where the host vehicle is caused to follow the forward traffic lane, in the automatic steering at the time of parking the vehicle, a steering wheel needs to be rotated significantly. Accordingly, the control current for the automatic steering is found in the low frequency range, and hence discrimination from the driver's steering intervention is impossible. For this reason, the configuration of Patent Document 2 has been inapplicable to the automatic steering at the time of parking a vehicle.

In order to solve the above-mentioned problems, the present invention has been made, and has an object to provide a steering control device capable of performing smooth automatic steering control by suppressing, during automatic steering, fluctuation of electric power assist torque, which is caused by inertia torque acting on a steering wheel, and enabling a driver to perform steering operation with ease when the driver operates the steering wheel during the automatic steering.

Means for solving the Problems

The present invention provides a steering control device for performing electric power assist control for assisting steering operation and automatic steering control for performing position control of wheels, the wheels being turned according to rotation of a steering shaft connected to a steering wheel, the steering shaft being provided with an actuator. The steering control device includes: an electric power assist control section for calculating a target current for electric power assist for the actuator, the target current for electric power assist being necessary for executing the electric power assist control; an automatic steering control section for calculating a target current for automatic steering for the actuator, the target current for automatic steering being necessary for executing the automatic steering control for performing the position control of the wheels; a current control section for controlling a current of the actuator so that the current of the actuator becomes identical to a sum of the target current for electric power assist and the target current for automatic steering at a time of the automatic steering control; and a frequency component extractor for extracting a predetermined frequency component that contains a driver's steering frequency of the target current for electric power assist or a driver's steering frequency of steering torque obtained from a torque sensor provided to the steering shaft and does not contain a frequency of a fluctuation component caused by inertia torque of the steering wheel, and correcting the target current for electric power assist or the steering torque obtained from the torque sensor based on the extracted predetermined frequency component.

Effects of the Invention

According to the present invention, at the time of the automatic steering, the automatic steering control can be performed smoothly by suppressing the fluctuation of the electric power assist torque, which is caused by the inertia torque of the steering wheel, and, when the driver operates the steering wheel during the automatic steering, the driver can perform the steering operation with ease.

Brief Description of the Drawings

[FIG. 1] A configuration diagram illustrating a steering control device according to an embodiment of the present invention.

[FIG. 2] Time charts indicating a steering angle at the time of automatic steering and steering torque detected by a torque sensor of the steering control device according to the present invention.

[FIG. 3] Time charts indicating the steering angle of a case where acceleration fluctuation is large due to large change in steering angle at the time of the automatic steering and the steering torque detected by the torque sensor of the steering control device according to the present invention.

[FIG. 4] A flow chart illustrating an example of operation of the steering control device according to a first embodiment of the present invention.

[FIG. 5] A block diagram of an electric power assist control section of the steering control device according to the first embodiment of the present invention.

[FIG. 6] A diagram illustrating an example of an assist map stored in a base assist current calculator of the steering control device according to the first embodiment of the present invention.

[FIG. 7] A flow chart illustrating an example of operation of a frequency component extractor of the steering control device according to the first embodiment of the present invention.

[FIG. 8] A block diagram illustrating an example of the operation of the frequency component extractor of the steering control device according to the first embodiment of the present invention.

[FIG. 9] Diagrams illustrating an example of frequency characteristics of a low-pass filter of the frequency component extractor of the steering control device according to the first embodiment of the present invention.

[FIG. 10] A diagram illustrating an example of a map of a correction value $\alpha$ with respect to the amount of a target current for electric power assist Ieps2 of the frequency component extractor of the steering control device according to the first embodiment of the present invention.

[FIG. 11] A flow chart illustrating an example of operation of an automatic steering control section of the steering control device according to the first embodiment of the present invention.

[FIG. 12] A block diagram illustrating another example of the operation of the frequency component extractor of the steering control device according to the first embodiment of the present invention.

[FIG. 13] A flow chart illustrating an example of operation of a steering control device according to a second embodiment of the present invention.

[FIG. 14] A block diagram illustrating an example of operation of a frequency component extractor of the steering control device according to the second embodiment of the present invention.

Best Mode for carrying out the Invention

First embodiment

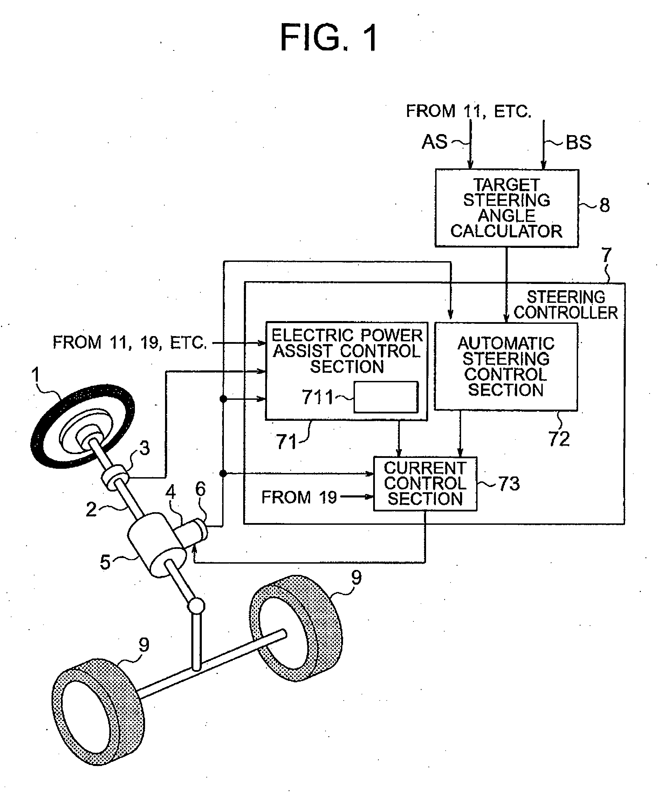

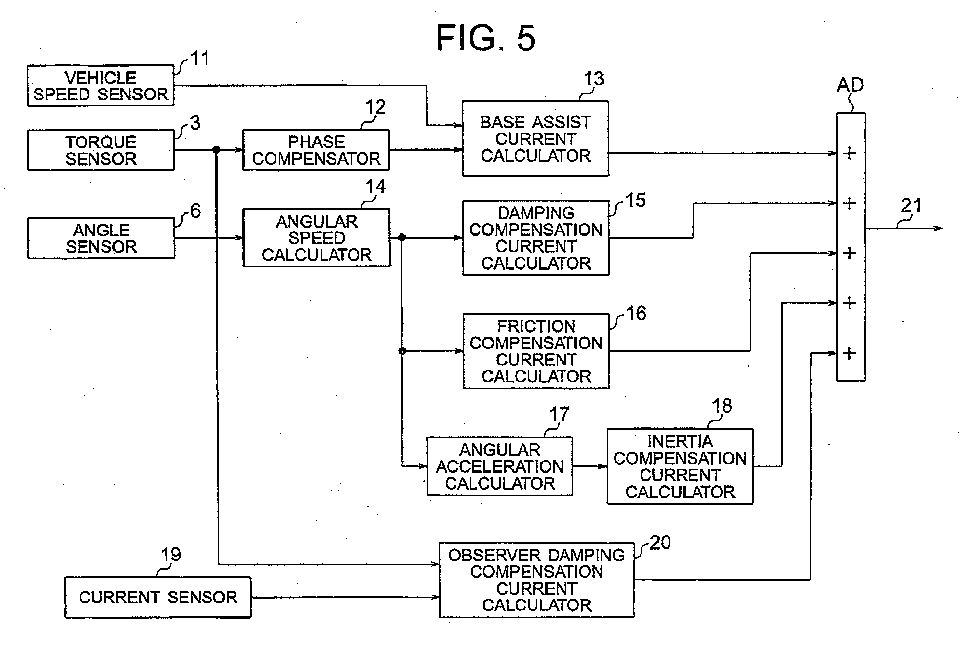

FIG. 1 is a configuration diagram illustrating a steering control device according to an embodiment of the present invention. Wheels 9 provided on both sides are turned according to rotation of a steering shaft 2 connected to a steering wheel 1. A torque sensor 3 is provided to the steering shaft 2, and detects steering torque acting on the steering shaft 2. A motor 4 that serves as an actuator is connected to the steering shaft 2 via a reduction mechanism 5, and is capable of providing torque generated by the motor 4 to the steering shaft 2. On the motor 4, an angle sensor 6 for detecting a rotor rotational angle of the motor 4 is provided. A speed of a vehicle is detected by a vehicle speed sensor 11 (not illustrated in FIG. 1, see FIG. 5). Further, a current flowing through the motor 4 is detected by a current sensor 19 (not illustrated in FIG. 1, see FIG. 5).

A steering controller 7 includes: an electric power assist control section 71 for calculating a target current for electric power assist, which is a target current of the motor 4 necessary for implementing electric power assist control with which steering of a driver is assisted; an automatic steering control section 72 for calculating a target current for automatic steering, which is a target current of the motor 4 necessary for executing automatic steering control with which the positions of the wheels 9 are controlled; and a current control section 73 for controlling the current of the motor 4 so that a current detected by the current sensor 19 becomes identical to the sum of the target current for electric power assist and the target current for automatic steering at the time of the automatic steering control. The electric power assist control section 71 includes a frequency component extractor 711 for removing a steering wheel vibration component from the target current for electric power assist, extracting a steering component of the driver, and correcting the current for electric power assist.

A target steering angle calculator 8 calculates a target steering angle to be used at the time of the automatic steering control, and transmits the calculated target steering angle to the steering controller 7.

At the time of manual steering in which the driver operates a steering wheel without the automatic steering control being performed, the current control section 73 performs control so that the current of the motor 4 becomes identical to the target current for electric power assist calculated by the electric power assist control section 71. With this configuration, at the time of the manual steering, there is provided a steering control device capable of conventional electric power steering.

Next, automatic steering is described. During the automatic steering, in a state where the driver is not performing steering operation, the steering shaft 2 is rotated with the use of the motor 4, to thereby cause the wheels 9 to be automatically turned. For example, if the driver selects the automatic steering while parking the vehicle or driving on an expressway, the target steering angle calculator 8 calculates a target steering angle used for causing the vehicle to follow a target driving path, based on a signal AS indicating a quantity of a vehicle status, such as a vehicle speed signal detected by the vehicle speed sensor 11, and a signal BS indicating the target driving path of the vehicle, and then transmits the calculated target steering angle to the steering controller 7. Based on the obtained target steering angle and the rotor rotational angle (signal) detected by the angle sensor 6, the automatic steering control section 72 calculates the target current for automatic steering so that the steering shaft 2 follows the target steering angle, and then outputs the target current for automatic steering to the current control section 73.

At the time of the automatic steering, the current control section 73 performs current control so that the current of the motor 4 detected by the current sensor 19 follows the target current by setting, as the target current of the motor 4, the sum of the target current for automatic steering calculated by the automatic steering control section 72 and the target current for electric power assist calculated by the electric power assist control section 71. With this configuration, if the driver selects the automatic steering, the steering operation is performed by the motor 4, which therefore enables the driver to park the vehicle or drive on an expressway only with operations such as acceleration and braking without performing the steering operation.

Further, by providing the target current for electric power assist to the target current of the motor 4 during the automatic steering, steering torque necessary for the steering operation of the driver when the driver performs the steering operation during the automatic steering is made smaller compared to a case where the target current for electric power assist is not provided, which therefore enables easier steering operation. The reason for this is as follows. Owing to the fact that the sum of the target current for automatic steering and the target current for electric power assist is set as the target current of the motor 4, when the driver performs steering against the automatic steering, the target current for electric power assist serves to cancel the target current for automatic steering. As a result, torque output from the motor 4 is generated in such a direction that assists the steering of the driver.

In this manner, by driving the motor with the sum of the target current for automatic steering and the target current for electric power assist being set as the target current of the motor 4, the steering operation of the driver can be made easier during the automatic steering. However, in a state where the driver is not performing the steering, when the steering torque detected by the torque sensor 3 fluctuates due to an influence of inertia torque on the steering wheel 1, the target current for electric power assist fluctuates, resulting in fluctuation in target current of the motor 4. Accordingly, the automatic steering control is prevented from being performed smoothly, and there arises a problem that noise and vibration are generated.

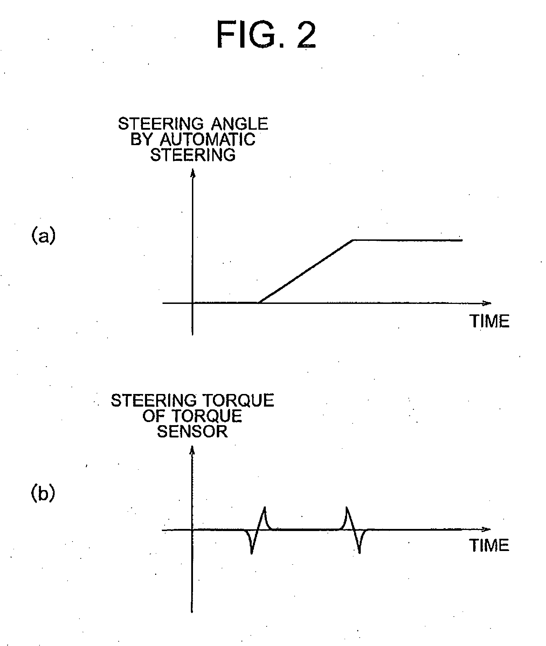

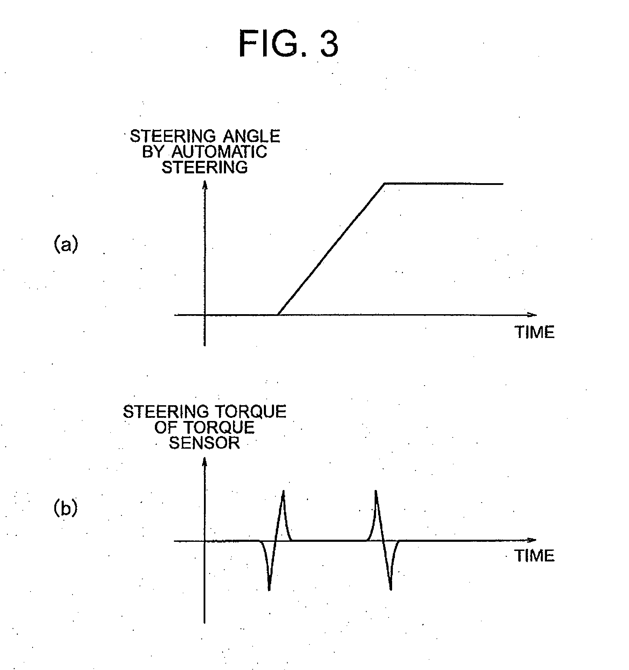

FIG. 2 and FIG. 3 are time charts each indicating the steering angle at the time of the automatic steering (a) and the steering torque detected by the torque sensor (b). At a place where the steering angle is increased abruptly when the automatic steering is started, and at a place where the increase of the steering angle is stopped abruptly when the automatic steering is ended, the inertia torque acting on the steering wheel becomes large. As a result, a torsion bar forming the torque sensor 3 is twisted, and the torque sensor 3 detects the twist as the steering torque.

Then, in a state where the steering is steady, that is, in a state where steering speed change by the automatic steering is small, the inertia torque acting on the steering wheel 1 becomes small, and hence the fluctuation in steering torque detected by the torque sensor 3 becomes small.

As illustrated in FIG. 3, in a case where change in steering angle is larger, resulting in larger fluctuation in acceleration, the inertia torque acting on the steering wheel 1 becomes larger, resulting in larger fluctuation in steering torque. In the automatic steering while parking a vehicle, the target steering angle is set to follow the target driving path of the vehicle. Specifically, when the vehicle speed is higher, the change in steering angle also becomes faster. Accordingly, the inertia torque acting on the steering wheel 1 becomes larger, which makes the fluctuation in steering torque larger. As a result, the fluctuation in target current for electric power assist becomes larger, which prevents the automatic steering control from being performed smoothly, and causes noise and vibration to be generated. For this reason, there also arises a problem that the vehicle speed at the time of the automatic steering needs to be restricted to be low in order to suppress the inertia torque.

Specifically, when abrupt steering, in which angular acceleration of the steering angle is large, is performed by the automatic steering, the steering torque of the torque sensor 3 fluctuates, which results in fluctuation in target current for electric power assist that is calculated based on the steering torque of the torque sensor 3. As a result, the automatic steering control is prevented from being performed smoothly, and noise and vibration are generated. Consequently, it becomes impossible to set the vehicle speed to be high. Further, if the target current for electric power assist is set smaller than normal, the steering torque when the driver performs the steering during the automatic steering becomes larger compared to a case where the target current for electric power assist is set to be the same as normal, which therefore prevents easy steering.

In view of those problems, in the present invention, attention is given to the fact that the steering torque fluctuation caused by the inertia torque of the steering wheel 1, which is detected by the torque sensor 3, has a higher frequency component compared to the steering torque of when the driver performs the steering. Then, a steering torque fluctuation component caused by the inertia torque of the steering wheel 1, which is the higher frequency component, is removed from the target current for electric power assist to extract the steering torque component caused by the steering of the driver, and hence the electric power assist is performed accurately when the driver performs the steering.

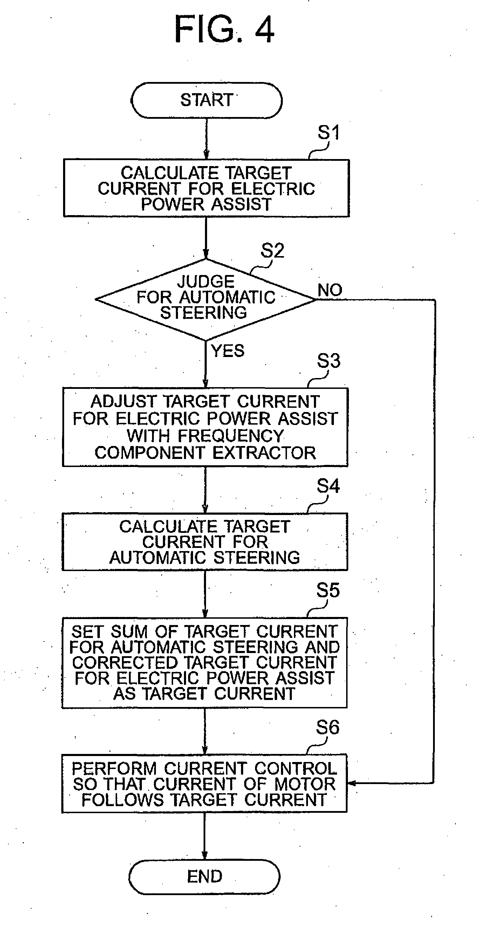

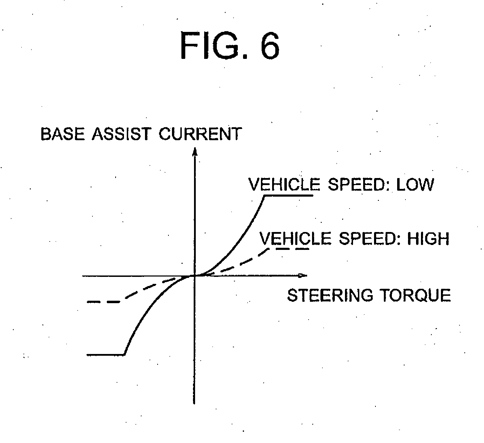

Hereinbelow, the operation of the steering control device according to the first embodiment is described with reference to a flow chart illustrated in FIG. 4. In Step S1 of FIG. 4, the electric power assist control section 71 calculates the target current for electric power assist. FIG. 5 illustrates a block diagram of the electric power assist control section 71. A phase compensator 12 performs phase compensation for the steering torque detected by the torque sensor 3. A base assist current calculator 13, which stores, as a map value, a value of base assist current corresponding to the steering torque after the phase compensation which is output by the phase compensator 12 as illustrated in FIG. 6, calculates the base assist current corresponding to the steering torque after the phase compensation. Further, as illustrated in FIG. 6, the map values vary depending on the vehicle speed detected by the vehicle speed sensor 11. When the vehicle speed is low, by increasing the value of the base assist current corresponding to the steering torque after the phase compensation, the steering torque of the driver while driving at low speed, such as while parking a vehicle, is reduced, resulting in easier steering.

An angular speed calculator 14 differentiates the rotor rotational angle detected by the angle sensor 6 to calculate a rotor angular speed. A damping compensation current calculator 15 calculates a damping compensation current based on the rotor angular speed. The damping compensation current has an effect of improving viscosity of the steering wheel 1. A friction compensation current calculator 16 calculates a friction compensation current based on the sign of the rotor angular speed. The friction compensation current is a current for causing the motor 4 to generate torque that cancels the friction existing in a steering mechanism, and has an effect of improving steering feel. An angular acceleration calculator 17 differentiates the rotor angular speed calculated by the angular speed calculator 14 to calculate a rotor angular acceleration. An inertia compensation current calculator 18 calculates an inertia compensation current based on the rotor angular acceleration. The inertia compensation current cancels the inertia force of the rotor, and accordingly, improves the steering feel.

An observer damping compensation current calculator 20 uses an observer to estimate a vibration speed of the motor 4 based on the steering torque detected by the torque sensor 3 and the current of the motor 4 which is detected by the current sensor 19, and then calculates an observer damping compensation current for providing damping torque. Note that the observer damping compensation current calculator 20 is a technology described in JP 3712876 B, and also, the base assist current calculator 13, the damping compensation current calculator 15, the friction compensation current calculator 16, and the inertia compensation current calculator 18 are publicly-known technologies described in JP 3712876 B.

The base assist current, the damping compensation current, the friction compensation current, the inertia compensation current, and the observer damping compensation current are added by an adder AD to obtain a target current for electric power assist 21. Further, at the time of the automatic steering, the target current for electric power assist 21 may be obtained by adding at least one of the damping compensation current, the friction compensation current, the inertia compensation current, and the observer damping compensation current to the base assist current. Further, at the time of the automatic steering, only the base assist current may be used as the target current for electric power assist 21. During the automatic steering, the driver principally does not perform the steering, and hence there is no influence without the damping compensation current, the friction compensation current, and the inertia compensation current which affect the damping property of hand-off steering and the steering feel. Accordingly, a calculation load on a microcomputer (CPU) constituting the target steering angle calculator 8 or the steering controller 7 can be reduced.

In Step S2 of FIG. 4, it is judged whether or not the automatic steering control is currently being performed. In a case where the automatic steering control is not being performed, the processing proceeds to Step S6, in which the current of the motor 4 is detected by the current control section 73, and the current control is performed so that the detected current of the motor 4 follows the target current for electric power assist 21. Specifically, based on the rotor rotational angle detected by the angle sensor 6 and comparison between the target current for electric power assist 21 and the detected current of the motor 4, the current control section 73 calculates a driving voltage to be applied to a terminal of the motor 4, to thereby perform PWM driving. Then, the motor 4 generates torque corresponding to the current, and provides the torque to the steering shaft 2.

In this manner, at the time of the manual steering instead of the automatic steering, the conventional electric power steering is implemented to assist the steering of the driver. In the first embodiment, the motor 4 is a brushless DC motor, and a resolver is used as the angle sensor. Note that the motor 4 and the angle sensor 6 are not limited thereto, and any motor and angle sensor may be used as long as the motor and the angle sensor are suitable for the electric power steering and the automatic steering. For example, the motor 4 may be a DC motor with a brush, and the angle sensor 6 may be an encoder.

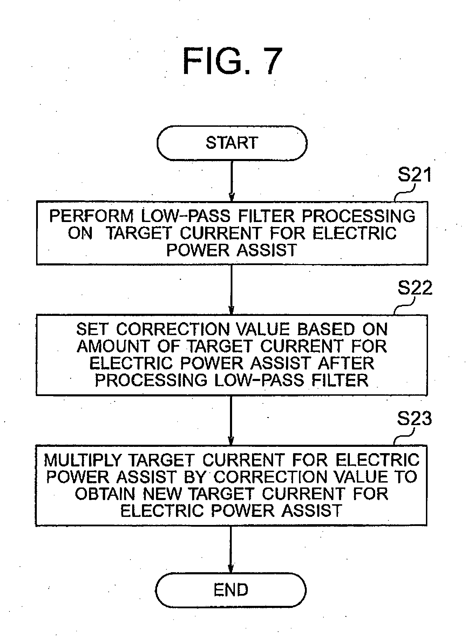

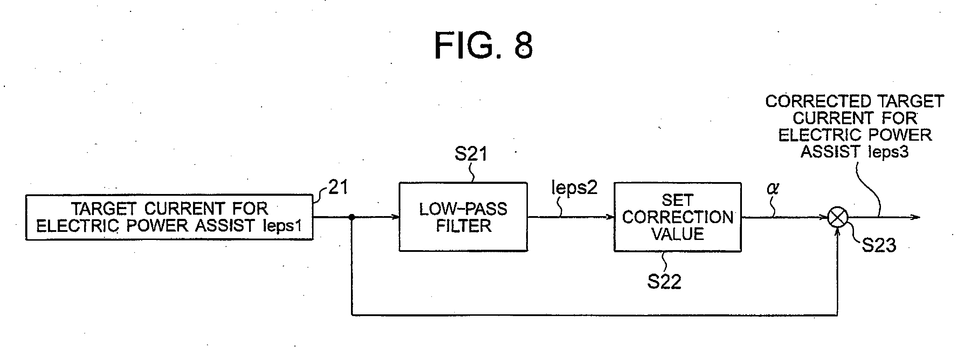

In Step S2, in a case where it is judged that the automatic steering is being performed, the processing proceeds to Step S3, In Step S3, in the electric power assist control section 71, the frequency component extractor 711 removes, from the target current for electric power assist, the fluctuation component caused by the inertia torque of the steering wheel and extracts the steering component of the driver, to thereby correct the current for electric power assist. The operation of the frequency component extractor 711 which is performed in Step S3 is described with reference to a flow chart illustrated in FIG. 7 and a block diagram illustrated in FIG. 8.

In Step S21 of FIG. 7, the target current for electric power assist 21 is subjected to low-pass filter processing to calculate a target current for electric power assist from which the fluctuation component caused by the inertia torque of the steering wheel 1 has been removed. Here, as illustrated in FIG. 8, assuming that the target current for electric power assist 21 is Ieps1 and that the target current for electric power assist after the low-pass filter processing is Ieps2, the target current for electric power assist after the low-pass filter processing Ieps2 is calculated by Equation (1) where s denotes a Laplace operator, and fc denotes a cut-off frequency of a low-pass filter.

[Equation 1]

$$Ieps2 = \frac{1}{\left(\dfrac{1}{2\pi fc}\right)s+1} Ipes1 \qquad (1)$$

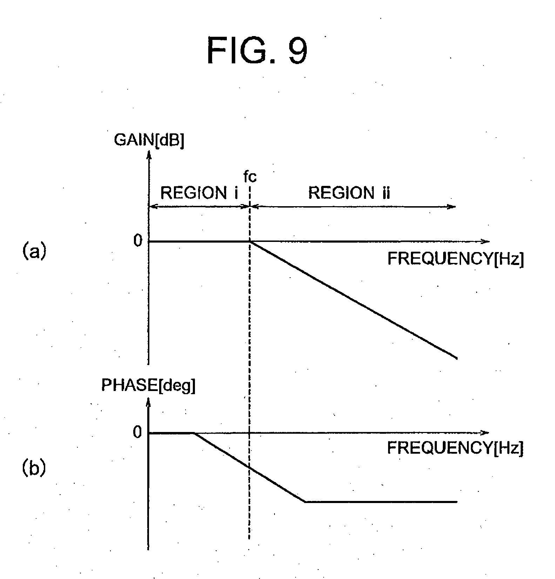

FIG. 9 illustrates frequency characteristics of the low-pass filter represented by Equation (1). In FIG. 9, (a) illustrates gain whereas (b) illustrates phase. The cut-off frequency fc is set to be between a possible steering frequency of the driver and a vibration frequency of the steering wheel 1 (higher than the possible steering frequency of the driver, and lower than the vibration frequency of the steering wheel 1). Specifically, a steering region of the driver is included in a region i of FIG. 9, and the frequency of the fluctuation (vibration) component caused by the inertia torque of the steering wheel 1 is included in a region ii. The frequency of the fluctuation component caused by the inertia torque of the steering wheel 1 becomes closer to a resonance frequency obtained from the moment of inertia of the steering wheel 1 and the rigidity of the torsion bar of the torque sensor 3, and accordingly, becomes approximately 10 Hz. Further, a steering frequency limit of the driver is equal to or lower than 5 Hz. Accordingly, the cut-off frequency fc is set to a value larger than 0 and to be equal to or smaller than 5 Hz.

In this manner, the steering component of the driver and the fluctuation component caused by the inertia torque of the steering wheel can be separated. Accordingly, in a case where the steering torque detected by the torque sensor 3 has fluctuated due to the inertia torque of the steering wheel 1 during the automatic steering, the target current for electric power assist 21 as Ieps1 contains the fluctuation component of the steering wheel, but the target current for electric power assist after the low-pass filter Ieps2 takes a value in the vicinity of 0 due to the removal of the vibration component of the steering wheel.

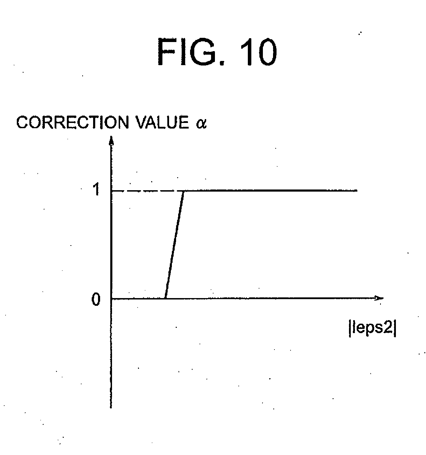

Next, in Step S22 of FIG. 7, through correction value setting of FIG. 8, an absolute value of the target current for electric power assist after the low-pass filter Ieps2 is calculated. Then, based on a map of correction value α with respect to the absolute value of the target current for electric power assist Ieps2, which is illustrated in FIG. 10, the correction value α is set. In the case where the steering torque of the torque sensor 3 has fluctuated due to the inertia torque of the steering wheel 1 during the automatic steering, the target current for electric power assist after the low-pass filter Ieps2 is small after the removal of the fluctuation component, and therefore is included in a region of the correction value α=0 illustrated in FIG. 10. Hence, the correction value α is 0. In the case where the driver performs the steering operation during the automatic steering, the steering frequency of the driver is equal to or lower than the cut-off frequency fc, and the target current for electric power assist Ieps1 takes a large value in order to serve to cancel the target current for automatic steering to assist the steering of the driver. Accordingly, the target current for electric power assist after the low-pass filter Ieps2 becomes large to reach a region of the correction value α=1 illustrated in FIG. 10. Hence, the correction value a is 1.

Further, as illustrated in FIG. 10, by connecting the region of the correction value α=0 and the region of the correction value α=1 with a slope, there is provided an effect of smoothly switching ON the electric power assist control when the driver performs the steering.

A threshold of the absolute value of the target current for electric power assist Ieps2, with which α is set to 0, is set based on the inertia torque of the steering wheel 1 which is calculated based on the expected automatic steering. Further, the expected automatic steering may be actually performed to empirically set a threshold with which noise and vibration are suppressed.

Further, in a case where the cut-off frequency fc is set to the vicinity of 0 Hz, for example, 1 Hz, the fluctuation component of the inertia torque of the steering wheel which is contained in the target current for electric power assist Ieps2 becomes even smaller, and hence the threshold of the absolute value of the target current for electric power assist Ieps2 illustrated in FIG. 10, with which α is set to 0, can be made smaller. Even in a case where the driver performs the steering at 1 Hz or higher, the target current for electric power assist Ieps1 takes a large value in order to cancel the target current for automatic steering to assist the steering of the driver, and accordingly, the target current for electric power assist after the low-pass filter Ieps2 becomes large to reach the region of the correction value α=1. illustrated in FIG. 10. Hence, the correction value a is 1.

Here, the low-pass filter is a first-order low-pass filter as in Equation (1), but may be a second- or higher-order low-pass filter. By increasing the order, it is possible to enhance the damping effect of a frequency component higher than the cut-off frequency. Further, the low-pass filter is desirably implemented by a digital filter, but an analog filter is also applicable. By employing a digital filter, only changing software of the steering controller 7 of the currently-used electric power steering becomes necessary, which can reduce the number of man-hours for implementation and cost.

Next, in Step S23 of FIG. 7 and FIG. 8, the target current for electric power assist Ieps1 is multiplied by the correction value α set in Step S22, to thereby correct the target current for electric power assist Ieps1. Then, the corrected target current for electric power assist Ieps3 is set as a new target current for electric power assist Ieps3.

Accordingly, when the steering torque of the torque sensor 3 has fluctuated by the action of the inertia torque on the steering wheel 1 during the automatic steering, the fluctuation component is removed, and the corrected target current for electric power assist Ieps3 becomes 0. As a result, the target current of the motor 4 does not fluctuate, and hence the automatic steering control can be performed smoothly. Further, when the driver performs the steering during the automatic steering, the correction value α is 1, and the corrected target current for electric power assist Ieps3 becomes identical to the target current for electric power assist Ieps1. As a result, the same electric power assist control as the electric power assist control performed at the time of the manual steering can be performed.

In addition, as the target current for electric power assist, by using the target current for electric power assist Ieps3 corrected in Step S23 instead of the target current for electric power assist after the low-pass filter Ieps2 calculated in Step S21, there is obtained a significant effect of being able to perform the electric power assist control without impairing stability of the electric power assist control. In the electric power assist control, the phase compensator 12 and the observer damping compensation current calculator 20 illustrated in FIG. 5 are used to secure the stability. However, in the target current for electric power assist after the low-pass filter Ieps2 calculated in Step S21, as illustrated in FIG. 9, a phase margin of the electric power assist control becomes small due to phase delay, and the stability is impaired. In view of this, in Step S22, the correction value α is set based on the amount of the target current for electric power assist Ieps2 to correct the target current for electric power assist Ieps1. As a result, the vibration component of the steering wheel can be removed without causing the phase delay while maintaining the stability.

Therefore, at the time of the automatic steering control, it is possible to prevent assist torque from being generated by misidentifying steering torque fluctuation of the torque sensor 3 which is caused by the inertia torque of the steering wheel as the steering torque of the driver, with a result that the automatic steering is performed smoothly. When the driver performs the steering, it is possible to smoothly assist the steering of the driver while securing the stability. Further, the target current for electric power assist Ieps3 used when the driver performs the steering is identical to the target current for electric power assist Ieps1 used at the time of normal manual steering, and hence the driver can perform the steering with ease.

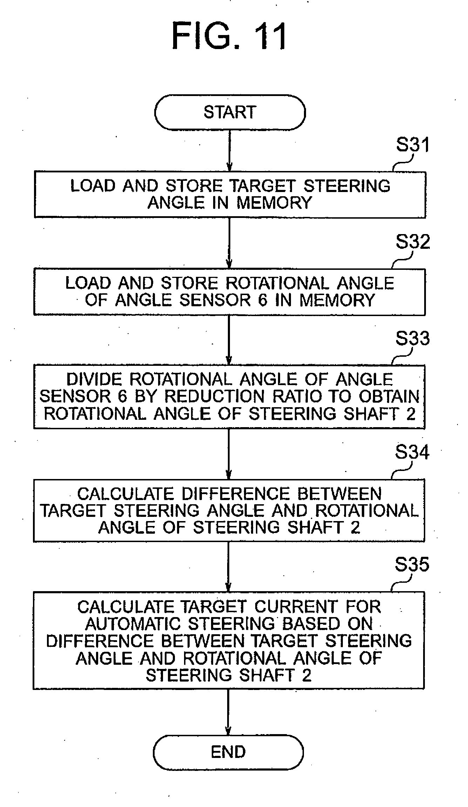

Next, in Step S4 of FIG. 4, the automatic steering control section 72 calculates the target current for automatic steering. FIG. 11 illustrates a flow chart for calculating the target current for automatic steering. In Step S31 of FIG. 11, the target steering angle transmitted from the target steering angle calculator 8 is loaded and stored in a memory. In Step S32, the rotor rotational angle of the angle sensor 6 is loaded and stored in the memory. In Step S33, the rotational angle of the steering shaft 2 is calculated based on the rotor rotational angle detected by the angle sensor 6 and a reduction ratio of the reduction mechanism 5.

In Step S34, a difference between the target steering angle and the rotational angle of the steering shaft 2 is calculated. In Step S35, based on the difference between the target steering angle and the rotational angle of the steering shaft 2 which is calculated in Step S34, the target current for automatic steering is calculated so that the difference between the target steering angle and the rotational angle of the steering shaft 2 becomes smaller. For the calculation of the target current for automatic steering, a publicly-known technology such as PID control is employed. For example, when the current control section 73 causes the current to flow so that the current of the motor 4 follows the target current for automatic steering, the motor 4 generates torque corresponding to the current, and the torque is provided to the steering shaft 2 to cause the angle of the steering shaft 2 to follow the target steering angle.

Referring back to FIG. 4, in Step S5, the current control section 73 adds up the target current for automatic steering and the corrected target current for electric power assist Ieps3 to obtain the target current of the motor (actuator) 4. Then, in Step S6, through detection of the current by the current sensor 19, the current control is performed so that the detected current of the motor 4 follows the target current. The motor 4 generates torque corresponding to the current flowing therethrough.

Note that, for example, the control of the flow chart of FIG. 4 is started when an ignition switch is switched ON and is executed in a predetermined execution cycle and with an infinite loop until the ignition switch is switched OFF.

As described above, in the steering control device according to the first embodiment, during the manual steering instead of the automatic steering, the current of the motor is controlled so that the current follows the target current for electric power assist. Thus, there is implemented a steering control device of the normal electric power steering. Then, during the automatic steering, the control is performed so that the current of the motor follows the target current obtained by adding up the target current for automatic steering and the corrected target current for electric power assist Ieps3, and accordingly, the fluctuation component caused by the inertia torque of the steering wheel 1 is removed. Consequently, when the driver is not performing the steering, torque sensor fluctuation does not affect the corrected target current for electric power assist Ieps3, and hence the automatic steering control can be performed smoothly. Therefore, there is no need to change an assist map (base assist current with respect to steering torque) illustrated in FIG. 6, and compared to a case where the assist map is made smaller, the steering torque of the driver can be made smaller. Specifically, when the driver performs the steering during the automatic steering control, the corrected target current for electric power assist Ieps3 becomes identical to the target current for electric power assist Ieps1 used at the time of the normal manual steering, which enables the driver to perform the steering with ease.

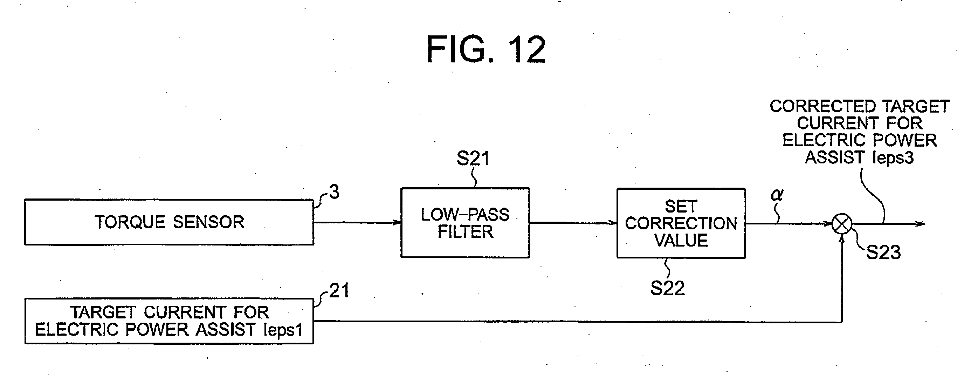

Note that, in the first embodiment, the target current for electric power assist Ieps1 is subjected to the low-pass filter processing in Step S21 of FIG. 7, and the correction value α is set in Step S22. However, in Step S21, as illustrated in FIG. 12, the low-pass filter processing may be performed on the steering torque detected by the torque sensor 3, and the correction value α may be set by using the steering torque after the low-pass filter processing. In this case, too, the frequency component of the steering torque is equal to or lower than the cut-off frequency fc when the driver performs the steering, and the correction value α is 1. Further, the steering torque fluctuation caused by the inertia torque acting on the steering wheel 1 during the automatic steering exceeds the cut-off frequency fc, and therefore is removed by the low-pass filter, with a result that the correction value α is 0. Consequently, the vibration of the steering wheel 1 does not cause the corrected target current for electric power assist Ieps3 to fluctuate, and hence the automatic steering control can be performed smoothly.

Second embodiment

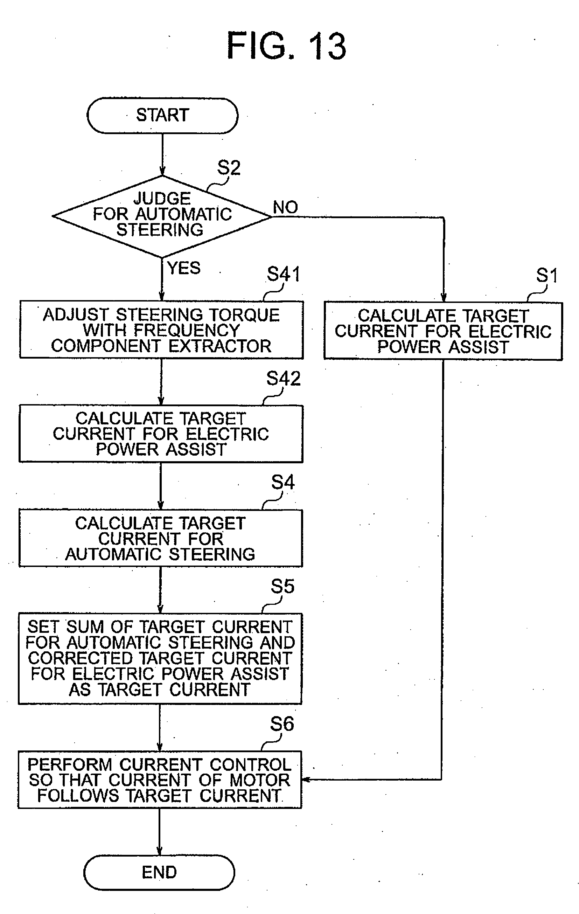

FIG. 13 is a flow chart for describing operation of a steering control device according to a second embodiment of the present invention. Note that like reference numerals denote portions identical to or similar to the portions of the first embodiment described above. Further, hereinbelow, a difference from the first embodiment is mainly described.

In Step S2 of FIG. 13, it is judged whether or not the automatic steering control is currently being performed. In the case where the automatic steering control is not being performed, similarly to the first embodiment, the target current for electric power assist is calculated in Step S1, and in Step S6, the current control for the motor 4 is performed by using the target current for electric power assist as the target current.

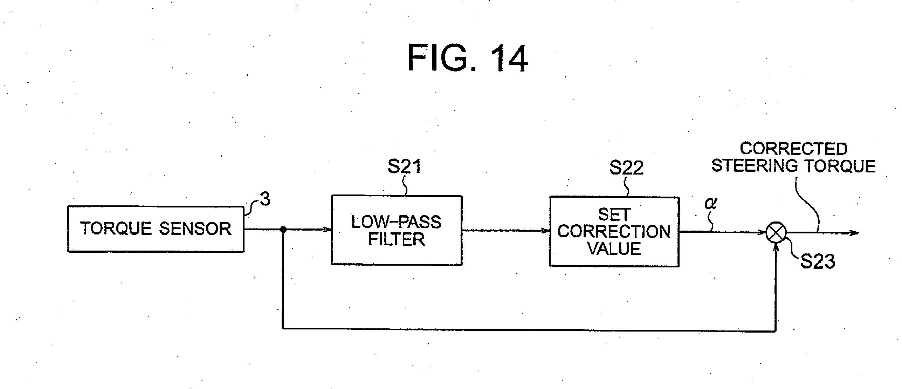

In the case where it is judged in Step S2 that the automatic steering control is being performed, in Step S41, a frequency component extractor 711 extracts the steering component of the driver from the steering torque detected by the torque sensor 3. FIG. 14 illustrates a block diagram illustrating operation of the frequency component extractor 711. A configuration thereof is similar to the configuration of the frequency component extractor 711 of the first embodiment, but an input signal is the steering torque obtained from the torque sensor 3. Accordingly, the fluctuation component of the steering torque which is caused by the inertia torque acting on the steering wheel 1 is removed from corrected steering torque, and the steering component of the driver is extracted.

In Step S42 of FIG. 13, with the use of the corrected steering torque, the target current for electric power assist is calculated in the same manner as in Step S1 of the first embodiment. Further, at the time of the automatic steering, the target current for electric power assist 21 may be obtained by adding at least one of the damping compensation current, the friction compensation current, the inertia compensation current, and the observer damping compensation current to the base assist current. Further, at the time of the automatic steering, only the base assist current may be used as the target current for electric power assist. In Step S5 and Step S6 of FIG. 13, processing similar to the processing of the first embodiment is performed.

According to the second embodiment, the same effect as in the first embodiment can be obtained. Specifically, during the manual steering instead of the automatic steering, the current of the motor is controlled so that the current follows the target current for electric power assist. Thus, there is implemented a steering control device of the normal electric power steering. Then, during the automatic steering, the control is performed so that the current of the motor follows the target current obtained by adding up the target current for automatic steering and the target current for electric power assist, and accordingly, the fluctuation component caused by the inertia torque of the steering wheel is removed. Consequently, when the driver is not performing the steering, the torque sensor fluctuation does not affect the target current for electric power assist, and hence the automatic steering control can be performed smoothly. Further, when the driver performs the steering during the automatic steering control, the target current for electric power assist becomes identical to the target current for electric power assist used at the time of the normal manual steering, which enables the driver to perform the steering with ease.

As described above, the steering control device according to the present invention includes a frequency component detector for extracting a predetermined frequency component that, for example, contains a driver's steering frequency of the target current for electric power assist and does not contain a frequency of the fluctuation component caused by the inertia torque of the steering wheel. Then, the correction value is set with respect to the amplitude of the extracted component, and the target current for electric power assist is corrected based on the set correction value to obtain a new target current for electric power assist. With this configuration, even in a case where the value of the torque sensor has fluctuated due to the inertia torque of the steering wheel at the time of the automatic steering control, an inertia torque component of the steering wheel can be removed from the target current for electric power assist, and hence the automatic steering control can be performed smoothly. Further, when the driver performs the steering, electric power assist torque is generated with respect to the steering component of the driver even during the automatic steering control, and hence there is provided a remarkable effect that the steering becomes easier.

Industrial Applicability

The steering control device according to the present invention is applicable to various types of vehicle.

**Claims**

1.  A steering control device for performing electric power assist control for assisting steering operation and automatic steering control for performing position control of wheels, the wheels being turned according to rotation of a steering shaft connected to a steering wheel, the steering shaft being provided with an actuator, said steering control device comprising:

    an electric power assist control section (71) for calculating a target current for electric power assist for the actuator, the target current for electric power assist being necessary for executing the electric power assist control;
    an automatic steering control section (72) for calculating a target current for automatic steering for the actuator, the target current for automatic steering being necessary for executing the automatic steering control for performing the position control of the wheels; and
    a current control section (73) for controlling a current of the actuator so that the current of the actuator becomes identical to a sum of the target current for electric power assist and the target current for automatic steering at a time of the automatic steering control;
    **characterised by** further comprising

a frequency component extractor (711) for extracting a predetermined frequency component containing a driver's steering frequency of the target current for electric power assist or a driver's steering frequency of steering torque obtained from a torque sensor provided to the steering shaft, and correcting the target current for electric power assist or the steering torque obtained from the torque sensor based on the extracted predetermined frequency component.

2. The steering control device according to claim 1, wherein, in said electric power assist control section, said frequency component extractor (711) extracts the predetermined frequency component that contains the driver's steering frequency of the target current for electric power assist and does not contain the frequency of the fluctuation component caused by the inertia torque of the steering wheel, and corrects the target current for electric power assist based on the extracted predetermined frequency component.

3. The steering control device according to claim 1, wherein, in said electric power assist control section, said frequency component extractor (711) extracts the predetermined frequency component that contains the driver's steering frequency of the steering torque obtained from the torque sensor provided to the steering shaft and does not contain the frequency of the fluctuation component caused by the inertia torque of the steering wheel, and corrects the target current for electric power assist based on the extracted predetermined frequency component.

4. The steering control device according to claim 1, wherein:

said frequency component extractor (711) extracts the predetermined frequency component that contains the driver's steering frequency of the steering torque obtained from the torque sensor provided to the steering shaft and does not contain the frequency of the fluctuation component caused by the inertia torque of the steering wheel, and corrects the steering torque obtained from the torque sensor based on the extracted predetermined frequency component; and
said electric power assist control section (71) calculates the target current for electric power assist based on the corrected steering torque obtained from the torque sensor.

5. The steering control device according to claim 1, wherein said frequency component extractor (711) sets a correction value based on an amplitude of the extracted predetermined frequency component, and corrects the target current for electric power assist or the steering torque obtained from the torque sensor based on the set correction value.

**Patentansprüche**

1. Lenksteuervorrichtung zur Durchführung einer elektrischen Servolenkungssteuerung zum Unterstützen beim Lenken, und einer automatischen Lenksteuerung zur Durchführung einer Positionssteuerung von Rädern, wobei die Räder gemäß einer Umdrehung von einer Lenkwelle, welche mit einem Lenkrad verbunden ist, gelenkt werden, wobei die Lenkwelle mit einem Stellglied bereitgestellt ist, wobei die Lenksteuervorrichtung umfasst:

einen elektrischen Servolenkungssteuerung-Abschnitt (71) zum Berechnen eines Sollstroms zur elektrischen Servolenkung für das Stellglied, wobei der Sollstrom zur elektrischen Servolenkung zur Ausführung der elektrischen Servolenkungssteuerung notwendig ist;
einen automatischen Lenksteuer-Abschnitt (72) zum Berechnen eines Sollstroms zur automatischen Lenkung für das Stellglied, wobei der Sollstrom zur automatischen Lenkung zur Ausführung der automatischen Lenksteuerung zur Durchführung der Positionssteuerung der Räder notwendig ist; und
einen Stromsteuer-Abschnitt (73) zum derartigen Steuern eines Stroms des Stellglieds, dass der Strom des Stellglieds gleich einer Summe des Sollstroms zur elektrischen Servolenkung und des Sollstroms zur automatischen Lenkung zum Zeitpunkt der automatischen Lenksteuerung wird;
ferner **gekennzeichnet durch**:

einen Frequenzkomponente-Extraktor (711) zum Extrahieren einer vorbestimmten Frequenzkomponente, welche eine Fahrer-Lenkfrequenz des Zielstroms zur elektrischen Servolenkung oder eine Fahrer-Lenkfrequenz eines Lenk-Drehmoments, welches von einem Drehmomentsensor erlangt ist, welcher der Lenkwelle bereitgestellt ist, umfasst, und zum Korrigieren des Sollstroms zur elektrischen Servolenkung oder des Lenk-Drehmoments, welches vom Drehmomentsensor erlangt ist, basierend auf der extrahierten vorbestimmten Frequenzkomponente.

**2.** Lenksteuervorrichtung nach Anspruch 1, bei welcher im elektrischen Servolenkungssteuerung-Abschnitt der Frequenzkomponente-Extraktor (711) jene vorbestimmte Frequenzkomponente extrahiert, welche die Fahrer-Lenkfrequenz des Sollstroms zur elektrischen Servolenkung umfasst, und nicht die Frequenz der Schwankungskomponente umfasst, welche durch das Trägheitsmoment des Lenkrads hervorgerufen wird, und den Sollstrom zur elektrischen Servolenkung basierend auf der extrahierten vorbestimmten Frequenzkomponente korrigiert.

**3.** Lenksteuervorrichtung nach Anspruch 1, bei welcher im elektrischen Servolenkungssteuerung-Abschnitt der Frequenzkomponente-Extraktor (711) jene vorbestimmte Frequenzkomponente extrahiert, welche die Fahrer-Lenkfrequenz des Lenk-Drehmoments, welches vom Drehmoment-Sensor, welcher der Lenkwelle bereitgestellt ist, umfasst, und nicht die Frequenz der Schwankungskomponente umfasst, welche durch das Trägheitsmoment des Lenkrads hervorgerufen wird, und den Sollstrom zur elektrischen Servolenkung basierend auf der extrahierten vorbestimmten Frequenzkomponente korrigiert.

**4.** Lenksteuervorrichtung nach Anspruch 1, bei welcher

der Frequenzkomponente-Extraktor (711) jene vorbestimmte Frequenzkomponente extrahiert, welche die Fahrer-Lenkfrequenz des Lenk-Drehmoments, welches vom Drehmoment-Sensor, welcher der Lenkwelle bereitgestellt ist, umfasst, und nicht die Frequenz der Schwankungskomponente umfasst, welche durch das Trägheitsmoment des Lenkrads hervorgerufen wird, und das vom Drehmoment-Sensor erlangte Lenk-Drehmoment basierend auf der extrahierten vorbestimmten Frequenzkomponente korrigiert; und

wobei der elektrische Servolenkungssteuerung-Abschnitt (71) den Sollstrom zur elektrischen Servolenkung basierend auf dem korrigierten Lenk-Drehmoment berechnet, welches vom Drehmoment-Sensor erlangt ist.

**5.** Lenksteuervorrichtung nach Anspruch 1, bei welcher der Frequenzkomponente-Extraktor (711) einen Korrekturwert basierend auf einer Amplitude von der extrahierten vorbestimmten Frequenzkomponente einstellt, und den Sollstrom zur elektrischen Servolenkung oder das Lenk-Drehmoment, welches vom Drehmoment-Sensor erlangt ist, basierend auf dem eingestellten Korrekturwert korrigiert.

**Revendications**

**1.** Dispositif de commande de direction pour effectuer une commande d'assistance électrique pour assister une opération de direction et une commande de direction automatique pour effectuer une commande de position de roues, les roues étant tournées en fonction d'une rotation d'un arbre de direction relié à un volant, l'arbre de direction étant pourvu d'un actionneur, ledit dispositif de commande de direction comprenant :

une section de commande d'assistance électrique (71) pour calculer un courant cible pour une assistance électrique pour l'actionneur, le courant cible pour l'assistance électrique étant nécessaire pour exécuter la commande d'assistance électrique ;
une section de commande de direction automatique (72) pour calculer un courant cible pour une direction automatique pour l'actionneur, le courant cible pour la direction automatique étant nécessaire pour exécuter la commande de direction automatique pour effectuer la commande de position des roues ; et
une section de commande de courant (73) pour commander un courant de l'actionneur de sorte que le courant de l'actionneur devienne identique à une somme du courant cible pour l'assistance électrique et du courant cible pour la direction automatique à un temps de la commande de direction automatique ;
**caractérisé en ce qu'**il comprend en outre
un extracteur de composante de fréquence (711) pour extraire une composante de fréquence prédéterminée contenant une fréquence de direction d'un conducteur du courant cible pour l'assistance électrique ou une fréquence de direction d'un conducteur d'un couple de direction obtenu à partir d'un capteur de couple fourni sur l'arbre de direction, et corriger le courant cible pour l'assistance électrique ou le couple de direction obtenu à partir du capteur de couple sur la base de la composante de fréquence prédéterminée extraite.

**2.** Dispositif de commande de direction selon la revendication 1, dans lequel, dans ladite section de commande d'assistance électrique, ledit extracteur de composante de fréquence (711) extrait la composante de fréquence prédéterminée qui contient la fréquence de direction du conducteur du courant cible pour l'assistance électrique et qui ne contient pas la fréquence de la composante de fluctuation provoquée par le couple d'inertie du volant, et corrige le courant cible pour l'assistance électrique sur la base de la composante de fréquence prédéterminée extraite.

**3.** Dispositif de commande de direction selon la revendication 1, dans lequel, dans ladite section de commande d'assistance électrique, ledit extracteur de composante de fréquence (711) extrait la composante de fréquence prédéterminée qui contient la fréquence de direction du conducteur du couple de direction obtenu à partir du capteur de couple fourni sur l'arbre de direction et qui ne contient pas la fréquence de la composante de fluctuation provoquée par le couple d'inertie du volant, et corrige le courant cible pour l'assistance électrique sur la base de la composante de fréquence prédéterminée extraite.

4. Dispositif de commande de direction selon la revendication 1, dans lequel :

ledit extracteur de composante de fréquence (711) extrait la composante de fréquence prédéterminée qui contient la fréquence de direction du conducteur du couple de direction obtenu à partir du capteur de couple fourni sur l'arbre de direction et qui ne contient pas la fréquence de la composante de fluctuation provoquée par le couple d'inertie du volant, et corrige le couple de direction obtenu à partir du capteur de couple sur la base de la composante de fréquence prédéterminée extraite ; et
ladite section de commande d'assistance électrique (71) calcule le courant cible pour l'assistance électrique sur la base du couple de direction corrigé obtenu à partir du capteur de couple.

5. Dispositif de commande de direction selon la revendication 1, dans lequel ledit extracteur de composante de fréquence (711) règle une valeur de correction sur la base d'une amplitude de la composante de fréquence prédéterminée extraite, et corrige le courant cible pour l'assistance électrique ou le couple de direction obtenu à partir du capteur de couple sur la base de la valeur de correction réglée.

# FIG. 1

FROM 11, ETC.

AS~     ~BS

TARGET
STEERING
ANGLE
CALCULATOR    ~8

STEERING
CONTROLLER    7

FROM 11, 19, ETC. →

ELECTRIC POWER
ASSIST CONTROL
SECTION

711~

71~

AUTOMATIC
STEERING
CONTROL
SECTION

72

1

3

2

4  6

5

CURRENT
CONTROL
SECTION    ~73

FROM 19 →

9

9

9

# FIG. 2

(a)

STEERING ANGLE
BY AUTOMATIC
STEERING

TIME

(b)

STEERING TORQUE
OF TORQUE
SENSOR

TIME

# FIG. 3

STEERING ANGLE
BY AUTOMATIC
STEERING

(a)

TIME

STEERING TORQUE
OF TORQUE
SENSOR

(b)

TIME

# FIG. 4

START

CALCULATE TARGET
CURRENT FOR ELECTRIC
POWER ASSIST — S1

JUDGE
FOR AUTOMATIC
STEERING — S2

NO

YES

ADJUST TARGET CURRENT
FOR ELECTRIC POWER ASSIST
WITH FREQUENCY
COMPONENT EXTRACTOR — S3

CALCULATE TARGET
CURRENT FOR
AUTOMATIC STEERING — S4

SET SUM OF TARGET CURRENT
FOR AUTOMATIC STEERING AND
CORRECTED TARGET CURRENT
FOR ELECTRIC POWER ASSIST
AS TARGET CURRENT — S5

PERFORM CURRENT CONTROL
SO THAT CURRENT OF MOTOR
FOLLOWS TARGET CURRENT — S6

END

# FIG. 5

EP 2 213 546 B1

# FIG. 6

BASE ASSIST CURRENT

VEHICLE SPEED: LOW

VEHICLE SPEED: HIGH

STEERING TORQUE

# FIG. 7

```
        ( START )

                                    S21
┌─────────────────────────────────┐
│  PERFORM LOW-PASS FILTER PROCESSING │
│   ON  TARGET CURRENT FOR ELECTRIC  │
│            POWER ASSIST            │
└─────────────────────────────────┘

                                    S22
┌─────────────────────────────────┐
│    SET CORRECTION VALUE BASED ON   │
│   AMOUNT OF TARGET CURRENT FOR    │
│   ELECTRIC POWER ASSIST AFTER     │
│   PROCESSING LOW-PASS FILTER      │
└─────────────────────────────────┘

                                    S23
┌─────────────────────────────────┐
│ MULTIPLY TARGET CURRENT FOR ELECTRIC │
│ POWER ASSIST BY CORRECTION VALUE TO  │
│  OBTAIN NEW TARGET CURRENT FOR     │
│     ELECTRIC POWER ASSIST         │
└─────────────────────────────────┘

          ( END )
```

# FIG. 8

EP 2 213 546 B1

# FIG. 9

(a)

(b)

# FIG. 10

CORRECTION VALUE $\alpha$

# FIG. 11

```
          ┌─────────────┐
          │    START    │
          └──────┬──────┘
                 │                              S31
          ┌──────▼──────────────────────┐
          │  LOAD AND STORE TARGET STEERING │
          │       ANGLE IN MEMORY        │
          └──────┬──────────────────────┘
                 │                              S32
          ┌──────▼──────────────────────┐
          │ LOAD AND STORE ROTATIONAL ANGLE │
          │   OF ANGLE SENSOR 6 IN MEMORY │
          └──────┬──────────────────────┘
                 │                              S33
          ┌──────▼──────────────────────┐
          │  DIVIDE ROTATIONAL ANGLE OF ANGLE │
          │ SENSOR 6 BY REDUCTION RATIO TO OBTAIN │
          │ ROTATIONAL ANGLE OF STEERING SHAFT 2 │
          └──────┬──────────────────────┘
                 │                              S34
          ┌──────▼──────────────────────┐
          │   CALCULATE DIFFERENCE BETWEEN │
          │ TARGET STEERING ANGLE AND ROTATIONAL │
          │    ANGLE OF STEERING SHAFT 2  │
          └──────┬──────────────────────┘
                 │                              S35
          ┌──────▼──────────────────────┐
          │  CALCULATE TARGET CURRENT FOR │
          │   AUTOMATIC STEERING BASED ON │
          │ DIFFERENCE BETWEEN TARGET STEERING │
          │   ANGLE AND ROTATIONAL ANGLE OF │
          │       STEERING SHAFT 2       │
          └──────┬──────────────────────┘
                 │
          ┌──────▼──────┐
          │     END     │
          └─────────────┘
```

# FIG. 12

TORQUE SENSOR — 3

LOW-PASS FILTER — S21

SET CORRECTION VALUE — S22

$\alpha$ — CORRECTED TARGET CURRENT FOR ELECTRIC POWER ASSIST Ieps3

S23

TARGET CURRENT FOR ELECTRIC POWER ASSIST Ieps1 — 21

EP 2 213 546 B1

# FIG. 13

START

S2 — JUDGE FOR AUTOMATIC STEERING

NO → S1 — CALCULATE TARGET CURRENT FOR ELECTRIC POWER ASSIST

YES

S41 — ADJUST STEERING TORQUE WITH FREQUENCY COMPONENT EXTRACTOR

S42 — CALCULATE TARGET CURRENT FOR ELECTRIC POWER ASSIST

S4 — CALCULATE TARGET CURRENT FOR AUTOMATIC STEERING

S5 — SET SUM OF TARGET CURRENT FOR AUTOMATIC STEERING AND CORRECTED TARGET CURRENT FOR ELECTRIC POWER ASSIST AS TARGET CURRENT

S6 — PERFORM CURRENT CONTROL SO THAT CURRENT OF MOTOR FOLLOWS TARGET CURRENT

END

EP 2 213 546 B1

# FIG. 14

CORRECTED
STEERING TORQUE

| | | | |
|---|---|---|---|
| TORQUE SENSOR | LOW-PASS FILTER | SET CORRECTION VALUE | |

S21

S22

$\alpha$

3

S23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3693048 B
- JP 3498910 B

- JP 3712876 B